(19) 

**Europäisches Patentamt**
**European Patent Office**
**Office européen des brevets**

(11) **EP 4 759 960 A1**

(12) **EUROPEAN PATENT APPLICATION**
published in accordance with Art. 153(4) EPC

(43) Date of publication:
**17.06.2026  Bulletin 2026/25**

(21) Application number: **24852412.6**

(22) Date of filing: **09.08.2024**

(51) International Patent Classification (IPC):
*C22C 38/60* (2006.01)  *C22C 38/42* (2006.01)
*C22C 38/00* (2006.01)  *C21D 8/02* (2026.01)
*C21D 9/46* (2006.01)  *C23C 2/06* (2006.01)
*C23C 2/28* (2006.01)  *C25D 3/22* (2006.01)

(52) Cooperative Patent Classification (CPC):
**C21D 8/02; C21D 9/46; C22C 38/00; C22C 38/42;**
**C22C 38/60; C23C 2/06; C23C 2/28; C25D 3/22**

(86) International application number:
**PCT/KR2024/011912**

(87) International publication number:
**WO 2025/034059 (13.02.2025 Gazette 2025/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.08.2023  KR 20230104308**

(71) Applicant: **POSCO Co., Ltd**
**Pohang-si, Gyeongsangbuk-do 37859 (KR)**

(72) Inventors:
• **LEE, Jae-Hoon**
**Gwangyang-si, Jeollanam-do 57807 (KR)**

• **SEONG, Hwan-Goo**
**Gwangyang-si, Jeollanam-do 57807 (KR)**
• **KIM, Jae-Joong**
**Gwangyang-si, Jeollanam-do 57807 (KR)**
• **NA, Hyun-Taek**
**Gwangyang-si, Jeollanam-do 57807 (KR)**
• **CHOI, Yong-Hoon**
**Gwangyang-si, Jeollanam-do 57807 (KR)**
• **JUNG, Ki-Taek**
**Gwangyang-si, Jeollanam-do 57807 (KR)**

(74) Representative: **Meissner Bolte Partnerschaft**
**mbB**
**Patentanwälte Rechtsanwälte**
**Postfach 86 06 24**
**81633 München (DE)**

(54) **STEEL SHEET AND METHOD FOR MANUFACTURING SAME**

(57)    The present invention relates to a steel sheet suitable for various uses including use in automobile parts and, more specifically, to a steel sheet and a manufacturing method thereof.

**EP 4 759 960 A1**

## Description

Technical Field

The present disclosure relates to a steel sheet suitable for various applications, including automotive components, and more specifically, to a steel sheet and a method for manufacturing the same.

Background Art

To address the global climate crisis, automakers are demanding that steelmakers gradually supply automotive steel sheets with reduced $CO_2$ emissions, with the goal of achieving carbon neutrality by 2050. For this reason, steelmakers are currently developing automotive steel sheets with reduced $CO_2$ emissions through the recycling of scrap iron, while utilizing existing blast furnace-converter furnace or electric arc furnace steelmaking processes.
When scrap iron is used as a raw material, it is difficult to remove residual elements (tramp elements), such as Cu, Ni, or the like, contained in the scrap iron during refining, remaining in steel after refining. The residual elements may degrade properties of the steel or deteriorate a surface quality thereof. Therefore, high-quality sheet products, such as automotive steel sheets, have been manufactured using molten iron as a primary raw material, and a conventional blast furnace-converter process may significantly reduce C and N contents in the steel while maintaining strict control over the inclusion of the residual elements.
Meanwhile, a technique for manufacturing automotive steel sheets with excellent formability from electric furnace steel containing residual elements using an electric arc furnace (EAF) steelmaking process has been proposed, as follows.
Patent Documents 1 and 2 disclose techniques for manufacturing cold-rolled steel sheets with excellent formability. Specifically, the cold-rolled steel sheets, despite containing large amounts of residual elements, exhibit excellent cold formability. However, the techniques do not consider the goal of improving poor plating adhesion of the steel sheets, nor the means for achieving this goal.
Though techniques for manufacturing automotive steel sheets containing residual elements have been proposed, automotive steel sheets with improved formability and plating adhesion, despite containing residual elements, have not yet been developed.
(Patent Document 1) Japanese Patent Laid-Open No. 1995-118795
(Patent Document 2) Japanese Patent Laid-Open No. 1998-025541

Disclosure of Invention

Technical Problem

An aspect of the present disclosure is to provide a steel sheet with improved plating adhesion along with formability despite containing residual elements when manufacturing automotive steel sheets by recycling scrap iron, and a method for manufacturing the same.
The goals of the present disclosure are not limited to those described above. Those skilled in the art will have no difficulty understanding the additional objectives of the present disclosure from the overall description of the present disclosure.

Solution to Problem

An aspect of the present disclosure provides a steel sheet comprising, by weight, carbon (C): greater than 0% to 0.0700%, silicon (Si): greater than 0% to 0.800%, manganese (Mn): greater than 0% to 1.000%, aluminum (Al): greater than 0% to 0.500%, phosphorus (P): 0% to 0.080%, sulfur (S): 0% to 0.0500%, nitrogen (N): 0% to 0.0300%, copper (Cu): greater than 0% to 1.000%, nickel (Ni): greater than 0% to 1.000%, chromium (Cr): greater than 0% to 1.000%, tin (Sn): greater than 0% to 0.5000%, at least one selected from the following groups (i) to (vi), and a remainder of Fe and unavoidable impurities.

> (i) molybdenum (Mo): 0% to 1.000%
> (ii) at least one of titanium (Ti): 0 to 0.500%, niobium (Nb): 0 to 0.500%, vanadium (V): 0 to 0.500%, and boron (B): 0 to 0.0200%
> (iii) at least one of magnesium (Mg): 0 to 0.050%, calcium (Ca): 0 to 0.050%, and a rare earth element (REM) excluding yttrium (Y): 0 to 0.050%
> (iv) at least one of tungsten (W): 0 to 0.50% and zirconium (Zr): 0 to 0.50%

(v) at least one of antimony (Sb): 0 to 0.5000% and cobalt (Co): 0 to 0.5000%

(vi) at least one of yttrium (Y): 0 to 0.200% and hafnium (Hf): 0 to 0.200%

In an embodiment of the present disclosure, a steel sheet in which A/B satisfies 0.15 to 30.00, if A is a content (wt%) of average (Cu+Cr+Ni+Sn) in a surface portion, and B is a content (wt%) of average (Cu+Cr+Ni+Sn) in a central portion, may be provided.

In an embodiment of the present disclosure, a steel sheet in which a microstructure is a ferrite single phase may be provided, and an average grain size of the ferrite may be 6 to 50 $\mu$m.

In an embodiment of the present disclosure, a steel sheet in which a value (I/II) obtained by dividing an average grain size (I) of the cold-rolled steel sheet by an average grain size (II) of the hot-rolled steel sheet satisfies 0.60 to 0.95 may be provided.

A steel sheet according to an embodiment of the present disclosure may have excellent formability with high strength, and may have excellent plating adhesion when a subsequent plating process is performed.

In an embodiment of the present disclosure, in the steel sheet, a product (TS × El) of tensile strength (TS) and elongation (El) may be 4.0 to 30.0 GPa·%, and a product (r-value × El) of Lankford value (r-value) and elongation may be 20 to 200%.

In an embodiment of the present disclosure, the steel sheet may include a plating layer formed on at least one surface, and a powdering peeling width of the plating layer may be less than 7 mm.

Another aspect of the present disclosure provides a method for manufacturing a steel sheet including preparing a steel slab; heating the steel slab at a temperature range of 900 to 1300°C; finish-rolling the heated steel slab in an austenite region of an Ar3 transformation point or higher or in a ferrite region of the Ar3 transformation point or lower, to obtain a hot-rolled steel sheet; coiling the hot-rolled steel sheet at a temperature of 700°C or higher; cooling the coiled hot-rolled steel sheet to a temperature range of 250 to 350°C at a rate of 10°C/min or lower; cold-rolling the hot-rolled steel sheet after the cooling at a cold reduction ratio of 50% or higher, to obtain a cold-rolled steel sheet; and annealing the cold-rolled steel sheet at a temperature of 600°C or higher for 10 seconds or longer.

In an embodiment of the present disclosure, the steel slab may have the aforementioned alloy composition.

In an embodiment of the present disclosure, the steel slab may be obtained by continuously casting molten steel obtained through a steelmaking process in an electric furnace.

In an embodiment of the present disclosure, the annealing may be performed by heating the cold-rolled steel sheet to an annealing temperature at a heating rate of 2 to 60°C/s.

In an embodiment of the present disclosure, plating the cold-rolled steel sheet after the annealing may be further included, and the plating may be a hot-dip plating or electroplating process.

In an embodiment of the present disclosure, the hot-dip plating may be hot-dip galvanizing at a temperature range of 440 to 520°C, and alloy-heating after the hot-dip galvanizing may be further performed.

According to another aspect of the present disclosure, a steel sheet manufactured by the aforementioned manufacturing method and in which a value (I/II) obtained by dividing an average grain size (I) of the cold-rolled steel sheet after the annealing by an average grain size (II) of the hot-rolled steel sheet satisfies 0.60 to 0.95 may be provided.

Advantageous Effects of Invention

According to the present disclosure, an automotive steel sheet with improved plating adhesion along with formability despite containing residual elements may be provided.

A steel sheet of the present disclosure may be manufactured by recycling scrap iron, and may thus have an advantage of excellent $CO_2$ reduction when applied as a material such as automobile bodies or the like.

Various advantages and effects of the present disclosure are not limited to the above-described content, and will be more readily understood when specific embodiments of the present disclosure are described.

Best Mode for the Invention

The terminology used herein is merely for referring to specific embodiments and is not intended to limit the present disclosure. Singular forms used herein include plural forms as well, unless the phrases clearly indicate the opposite meaning.

The meaning of "comprising" or "including" used in the specification specifies specific characteristics, regions, integers, steps, operations, elements, and/or components, and does not exclude the presence or addition of other specific characteristics, regions, integers, steps, operations, elements, components, and/or groups.

Although not defined otherwise, all terms including technical and scientific terms used herein have the same meaning as commonly understood by those of ordinary skill in the art to which the present disclosure belongs. Terms defined in commonly used dictionaries are further interpreted as having meanings consistent with the related technical literature and the presently disclosed content, and are not interpreted in an ideal or highly formal sense unless defined.

Hereinafter, a steel sheet according to an aspect of the present disclosure, particularly a steel sheet with excellent formability and plating adhesion, will be described in detail. It should be noted that, unless otherwise specified, the content of each element in the present disclosure refers to weight percent. Furthermore, ratios of crystals or structures are based on area unless otherwise specified.

Hereinafter, when describing a steel sheet, unless otherwise specified, it can be understood that the steel sheet refers to a cold-rolled steel sheet.

According to an aspect of the present disclosure, the steel sheet may include, by weight, carbon (C): greater than 0% to 0.0700%, silicon (Si): greater than 0% to 0.800%, manganese (Mn): greater than 0% to 1.000%, aluminum (Al): greater than 0% to 0.500%, phosphorus (P): 0% to 0.080%, sulfur (S): 0% to 0.0500%, nitrogen (N): 0% to 0.0300%, copper (Cu): greater than 0% to 1.000%, nickel (Ni): greater than 0% to 1.000%, chromium (Cr): greater than 0% to 1.000%, tin (Sn): greater than 0% to 0.5000%.

Hereinafter, a reason for limiting an alloy composition of the steel sheet provided in the present disclosure as described above will be described in detail.

Carbon (C): greater than 0% to 0.0700%

Carbon (C) may be an effective element for securing strength of steel.

In an embodiment of the present disclosure, when a C content exceeds 0.0700%, it is difficult to achieve desired elongation and r-value. Therefore, the C content may be 0.0700% or less. In another embodiment of the present disclosure, the C content may be 0.0650% or less or 0.0600% or less.

C may be an essential element in steel manufacturing, and a content thereof may be greater than 0%. However, in an embodiment of the present disclosure, when the C content may be less than 0.0003%, the effect of reducing C may be hardly achieved, and instead, it increases steelmaking costs, which may be undesirable. Therefore, the C content may be 0.0003% or greater. In another embodiment of the present disclosure, the carbon (C) content may be 0.0010% or greater, or 0.0015% or greater.

Silicon (Si): greater than 0% to 0.800%

Silicon (Si) may be an element that enhances strength through solid solution strengthening. It may be useful for strengthening ferrite and making a structure uniform, thereby improving formability. Furthermore, Si may be an element necessary for deoxidation during steelmaking.

In an embodiment of the present disclosure, when an Si content exceeds 0.800%, plating defects, such as underplating, may occur during plating and weldability of the steel sheet may be impaired. Therefore, the Si content may be 0.800% or less. In another embodiment of the present disclosure, the Si content may be 0.700% or less.

In an embodiment of the present disclosure, the Si content may exceed 0%, and considering manufacturing costs, the Si content may be 0.001% or greater.

Manganese (Mn): greater than 0% to 1.000%

Manganese (Mn) may be an element useful for simultaneously improving strength and ductility of steel.

In an embodiment of the present disclosure, a Mn content exceeding 1.000% may be undesirable because it degrades formability. In another embodiment of the present disclosure, the Mn content may be 0.900% or less, or 0.400% or less.

In an embodiment of the present disclosure, the Mn content may exceed 0%, and considering manufacturing costs, the content may be 0.001% or greater.

Aluminum (Al): greater than 0% to 0.500%

Aluminum (Al) may be an element that combines with oxygen (O) in steel to act as a deoxidizer. Similarly to Si, it may strengthen ferrite, may homogenize a structure, and may improve formability.

In an embodiment of the present disclosure, when a content of Al exceeds 0.500%, there may be a problem of deterioration in formability, so it may be included at 0.500% or less. In another embodiment of the present disclosure, the Al may be included at 0.400% or less.

In an embodiment of the present disclosure, aluminum (Al) may be included in excess of 0%. Since controlling the Al content to less than 0.001% may increase manufacturing costs, the content may be limited to 0.001% or greater.

Phosphorus (P): 0.080% or less

Phosphorus (P) may be an element added to improve strength of steel. In an embodiment of the present disclosure, when a P content exceeds 0.080%, the formability of the steel may be impaired and brittleness may occur. Therefore, the P content may be 0.080% or less. In another embodiment of the present disclosure, the P content may be 0.070% or less.

In an embodiment of the present disclosure, the P content may be 0%. Considering manufacturing costs, the P content may be limited to 0.001% or greater.

Sulfur (S): 0.0500% or less

Sulfur (S) may be an element inevitably added during a steel manufacturing process. It combines with manganese (Mn) in steel to form MnS inclusions, thereby hindering ductility of the steel. Therefore, in an embodiment of the present disclosure, an S content may be limited to 0.0500% or less. In another embodiment of the present disclosure, S may be included at 0.0400% or less.

In an embodiment of the present disclosure, S may be 0%. However, since it may be unavoidably contained in the steel, the content may exceed 0%. In an embodiment of the present disclosure, controlling the S content to less than 0.0010% significantly increases manufacturing costs. Therefore, the S content may be 0.0010% or greater.

Nitrogen (N): 0.0300% or less

Nitrogen (N) may be an element that may be inevitably added during a steel manufacturing process and causes cracking of slabs by forming nitrides during a continuous casting process. Therefore, in an embodiment of the present disclosure, N may be included at 0.0300% or less.

In an embodiment of the present disclosure, N may be 0%. Since N may be unavoidably contained in the steel, a content thereof may exceed 0%. In an embodiment of the present disclosure, controlling the N content to less than 0.0010% significantly increases manufacturing costs. Therefore, N may be included at 0.0010% or greater.

Copper (Cu) : greater than 0% to 1.000% and Nickel (Ni): greater than 0% to 1.000%

Copper (Cu) and nickel (Ni) may be elements that stabilize austenite and inhibit corrosion. Additionally, Cu and Ni may be useful elements for suppressing hydrogen-delayed fracture by concentrating on a surface of a steel sheet and preventing intrusion of hydrogen into the steel.

In an embodiment of the present disclosure, excessive Cu and Ni contents deteriorate formability, so they may be limited to 1.000% or less. In another embodiment of the present disclosure, Cu and Ni may be included at 0.900% or less.

In an embodiment of the present disclosure, Cu and Ni may be included at greater than 0%, and to fully achieve effects of Cu and Ni, they may be included at 0.0010% or greater.

Chromium (Cr): greater than 0% to 1.000%

Chromium (Cr) may be an element that suppresses austenite decomposition and stabilizes austenite during alloying of a manufactured steel sheet.

In an embodiment of the present disclosure, excessive Cr contents deteriorate formability, so the Cr content may be limited to 1.000% or less. In another embodiment of the present disclosure, Cr may be included at 0.900% or less.

In another embodiment of the present disclosure, Cr may be included at greater than 0%, but to fully achieve an added effect of Cr, it may be included at 0.001% or greater.

Tin (Sn): greater than 0% to 0.5000%

Tin (Sn) may be an element that improves the plating wettability and adhesion of steel. In an embodiment of the present disclosure, when the tin content in the steel exceeds 0.5000%, the steel may become brittle, causing cracks during hot or cold working. In another embodiment of the present disclosure, Sn may be included at 0.4000% or less.

In an embodiment of the present disclosure, Sn may be included in an amount exceeding 0%, and to fully obtain the effects of Sn, it may be included in an amount of 0.0005% or greater.

In addition to the alloy composition described above, the steel sheet of the present disclosure may further include one or more elements selected from groups (i) to (vi) described below. Since all of the elements described below may be optionally added, it may be noted that the content thereof may be 0%. The elements of groups (i) to (vi) may be referred to as residual elements.

(i) molybdenum (Mo): 0% to 1.000%

(ii) at least one of titanium (Ti): 0 to 0.500%, niobium (Nb): 0 to 0.500%, vanadium (V): 0 to 0.500%, and boron (B): 0 to 0.0200%

(iii) at least one of magnesium (Mg): 0 to 0.050%, calcium (Ca): 0 to 0.050%, and a rare earth element (REM) excluding yttrium (Y): 0 to 0.050%

(iv) at least one of tungsten (W): 0 to 0.50% and zirconium (Zr): 0 to 0.50%

(v) at least one of antimony (Sb): 0 to 0.5000% and cobalt (Co): 0 to 0.5000%

(vi) at least one of yttrium (Y): 0 to 0.200% and hafnium (Hf): 0 to 0.200%.

(i) molybdenum (Mo): 0% to 1.000%

Molybdenum (Mo) may be an element that suppresses austenite decomposition and stabilizes austenite during alloying of steel sheets manufactured similarly to Cr described above. In an embodiment of the present disclosure, excessive Mo content deteriorates formability, so the content may be limited to 1.000% or less. In another embodiment of the present disclosure, Mo may be included at 0.900% or less. Since the above-described effect may be achieved when the content of Mo is 0.0010% or greater when added, a lower limit may be limited to 0.0010%.

(ii) at least one of titanium (Ti): 0 to 0.500%, niobium (Nb): 0 to 0.500%, vanadium (V): 0 to 0.500%, and boron (B): 0 to 0.0200%

Titanium (Ti), niobium (Nb), and vanadium (V) may be elements that form precipitates in steel, and strength and impact toughness of the steel may be improved by formation of precipitates. In particular, the Ti, Nb, and V may prevent the deterioration of formability caused by solid solution carbon and solid solution nitrogen in the steel by precipitating them as carbides, nitrides, etc. In an embodiment of the present disclosure, to obtain the above-described effect, the elements may be added in an amount of 0.001% or greater. When each of the contents exceeds 0.500%, an addition effect may be saturated and manufacturing costs may increase, and therefore, an upper limit of each element may be limited to 0.500%. According to another embodiment of the present disclosure, each may be included at 0.400% or less.

Boron (B) may be an element that improves quenching property of steel, thereby increasing strength, and inhibits nucleation at grain boundaries. When a content thereof exceeds 0.0200%, there may be a concern that deep drawability of the steel may deteriorate. Therefore, in an embodiment of the present disclosure, the content of B may be limited to 0.0200% or less. In another embodiment of the present disclosure, the content of B may be included at 0.0100% or less. In an embodiment of the present disclosure, the content of B may be 0.0001% or greater, and in another embodiment, B may be included at 0.0005% or greater, or 0.0010% or greater.

(iii) at least one of magnesium (Mg): 0 to 0.050%, calcium (Ca): 0 to 0.050%, and a rare earth element (REM) excluding yttrium (Y): 0 to 0.050%

Magnesium (Mg), calcium (Ca), and a rare earth element (REM) excluding yttrium (Y) may be elements that improve ductility of steel by spheroidizing sulfides in the steel. In an embodiment of the present disclosure, when a content of each element exceeds 0.050%, not only the above-described effect is saturated, but also manufacturing costs increase, so the content of each element may be limited to 0.050% or less.

Rare earth elements (REMs) generally refer to a total of 17 metallic elements, including scandium (Sc), yttrium (Y), lanthanum (La), cerium (Ce) or the like. According to an embodiment of the present disclosure, a content of yttrium (Y) may be separately limited below. Therefore, in an embodiment of the present disclosure, the REM refer to 16 elements excluding Y.

(iv) at least one of tungsten (W): 0 to 0.50% and zirconium (Zr): 0 to 0.50%

Tungsten (W) and zirconium (Zr) may be elements that enhance quenching property of steel and thus its strength. Excessive addition of these elements not only saturates the aforementioned effects but also increases manufacturing costs. Therefore, when adding at least one of W and Zr, the content of each element may be limited to 0.50% or less.

(v) at least one of antimony (Sb): 0 to 0.5000% and cobalt (Co): 0 to 0.5000%

Antimony (Sb) and cobalt (Co) may be elements that improve plating wettability and plating adhesion of steel. In an embodiment of the present disclosure, when the content of each of the above elements in the steel exceeds 0.5000%, brittleness of the steel may increase, causing cracks during hot working or cold working. Therefore, the content of each element may be limited to 0.5000% or less. According to another embodiment of the present disclosure, each of these elements may be included at 0.4000% or less. To sufficiently obtain a desired effect by containing these elements, each thereof may be included at 0.0005% or greater.

(vi) at least one of yttrium (Y): 0 to 0.200% and hafnium (Hf): 0 to 0.200%

Yttrium (Y) and hafnium (Hf) may be elements that enhance corrosion resistance of steel. In an embodiment of the present disclosure, when the content of each of these elements exceeds 0.200%, there may be a risk of deterioration in ductility of the steel. Therefore, the content of each element may be limited to 0.200% or less.

A steel sheet according to an aspect of the present disclosure may include a remainder of Fe and unavoidable impurities, in addition to the aforementioned components. Since unintended impurities may inevitably be mixed in from raw materials or surrounding environment during a typical manufacturing process, they cannot be completely excluded. Since these impurities may be known to anyone skilled in the art, not all of them may be specifically mentioned herein. Furthermore, the addition of additional effective components other than the aforementioned components may not be completely excluded.

The steel sheet of the present disclosure, having the alloy composition described above, may improve its formability by controlling the content of residual elements at specific points along its thickness as follows.

Specifically, if A is a content (wt%) of average (Cu+Cr+Ni+Sn) in a surface portion, and B is a content (wt%) of average (Cu+Cr+Ni+Sn) in a central portion, it is preferable that A/B satisfies 0.15 to 30.00.

In the present disclosure, A/B may be significant in that it serves as an indicator of formability of the steel sheet. When the value of A/B may be less than 0.15 or exceeds 30.00, there may be a problem in that certain residual elements contained within the steel may not be uniformly distributed.

In this case, the central portion refers to a point t/2 in a thickness direction, and the surface portion refers to from a surface to an inflection point, which is a point at which concentration gradients of Cu, Cr, Ni, and Sn are changed (or are rapidly changed) when measured in the thickness direction.

In an embodiment of the present disclosure, the inflection point refers to a point corresponding to 99% of a (Cu+Cr+Ni+Sn) content in the central portion in the concentration gradient measurement value when a (Cu+Cr+Ni+Sn) content in a polar surface is greater than a (Cu+Cr+Ni+Sn) content in the central portion, or refers to a point corresponding to 1% of a (Cu+Cr+Ni+Sn) content in the central portion in the concentration gradient measurement value when the (Cu+Cr+Ni+Sn) content in the polar surface is less than that in the central portion. As a non-limiting example, concentration gradients of the aforementioned elements may be measured using FE-SEM or glow discharge spectroscopy (GDS).

As an example, when measuring a concentration of (Cu+Cr+Ni+Sn) across a thickness of the steel sheet, a (Cu+Cr+Ni+Sn) content at the polar surface may have the highest value, and the value may tend to decrease linearly from the polar surface toward the central portion.

As another example, when measuring the concentration of (Cu+Cr+Ni+Sn) across the thickness of a steel sheet, the (Cu+Cr+Ni+Sn) content at the polar surface may have the lowest value, and the value may tend to increase linearly from the polar surface toward the central portion.

It may be well known in the technical field of the present disclosure that steel sheets, i.e., cold-rolled steel sheets, may be obtained through a series of rolling processes. That is, as will be described in detail later, a cold-rolled steel sheet according to the present disclosure may be obtained by cold-rolling (and subsequent annealing heat treatment) a hot-rolled steel sheet obtained through hot-rolling and coiling processes.

In an embodiment of the present disclosure, it is preferable that a ratio of an average grain size of the hot-rolled steel sheet to an average grain size of the cold-rolled steel sheet obtained by cold-rolling and annealing heat treatment satisfies the following.

Specifically, in an embodiment of the present disclosure, a value (I/II) obtained by dividing an average grain size (I) of the cold-rolled steel sheet by an average grain size (II) of the hot-rolled steel sheet may satisfy 0.60 to 0.95.

Thus, according to the present disclosure, by controlling a grain size of the hot-rolled steel sheet obtained through hot-rolling, a grain size of the cold-rolled steel sheet obtained through subsequent cold-rolling and annealing heat treatments may be secured, thereby achieving excellent strength and formability.

When the value of I/II is less than 0.60, the grain size of the hot-rolled steel sheet becomes excessively fine, leading to a significant increase in rigidity. Conversely, when the value exceeds 0.95, the grain size becomes coarse, making it difficult to secure strength and formability.

In an embodiment of the present disclosure, a microstructure of the steel sheet may be a ferrite single phase.

That is, when the microstructure of the steel sheet includes structures other than ferrite, such as pearlite, or low-temperature-formed bainite or martensite, the intended formability cannot be secured. Even trace amounts of impurity structures unavoidably included during the process may not be intended to be excluded, and may be naturally included within the scope of the present disclosure.

In an embodiment of the present disclosure, an average grain size of the ferrite may be 6 to 50 μm. When the average grain size of the ferrite is less than 6 μm, the rigidity of the steel may increase, potentially leading to brittleness.

Conversely, when the average grain size exceeds 50 μm, strength achieved through grain refinement may be compromised.

It should be noted that the grain sizes of the hot-rolled and cold-rolled steel sheets mentioned above refer to grain sizes of ferrite.

A steel sheet according to an embodiment of the present disclosure may not only exhibit high strength but also excellent formability.

Specifically, according to an embodiment of the present disclosure, the steel sheet may have a product (TS × El) of tensile strength (TS) and elongation (El) of 4.0 to 30.0 GPa·%, and a product (r-value × El) of Lankford value (r-value) and elongation of 20 to 200%.

A steel sheet according to an embodiment of the present disclosure may have a plating layer on at least one surface.

In an embodiment of the present disclosure, the plating layer may be a zinc-based plating layer, which may be a plating layer primarily composed of zinc (Zn). A composition of plating layers commonly used in the art may be applied in the same manner. The zinc-based plating layer may also include a zinc-based plating layer alloyed through an alloying process.

As such, a steel sheet having a zinc-based plating layer on at least one surface may be a zinc-based plating steel sheet, such as a galvanized steel sheet (GI), a galvanealed steel sheet (GA), an electrogalvanized steel sheet (EG), an electrogalvanealed steel sheet, or the like.

In an embodiment of the present disclosure, a steel sheet having a zinc-based plating layer formed on at least one surface may be a steel sheet according to an embodiment of the present disclosure, and the aforementioned description may be equally applicable to the steel sheet.

A steel sheet (cold-rolled steel sheet) according to an embodiment of the present disclosure may have a concentration gradient of specific elements, such as residual elements Cu, Cr, Ni, and Sn, from the surface in the thickness direction. When a plating layer (e.g., a zinc-based plating layer) is formed on at least one surface of the steel sheet, the residual elements may diffuse further into the plating layer due to factors such as a temperature during plating, a temperature during alloying, or the like. Therefore, the concentration gradient of residual elements in the plated steel sheet may be realized from an interface between a base material, which may be a base steel sheet, and the plating layer in the thickness direction of the base material, but may also be realized from the alloy layer formed at the interface between the base material and the plating layer.

That is, the residual elements may have a concentration gradient, represented by A/B, due to differences in the diffusion rates of the residual elements toward the surface of the steel sheet during the cold-rolled steel sheet manufacturing process. This characteristic of the cold-rolled steel sheet also manifests in the plated steel sheet.

The plated steel sheet according to an embodiment of the present disclosure exhibits excellent powdering properties of the plating layer. Specifically, a powdering peeling width of the plating layer may be less than 7 mm.

Hereinafter, a method for manufacturing a steel sheet (cold-rolled steel sheet) and a plated steel sheet according to another aspect of the present disclosure will be described in detail.

First, the steel sheet, i.e., the cold-rolled steel sheet, according to the present disclosure may be obtained through a series of processes, for example, [steel slab heating - hot-rolling - coiling - cooling - cold-rolling - annealing]. Each process may be described in detail below, and it is noted that the following manufacturing process is an example for manufacturing a cold-rolled steel sheet and a subsequent plated steel sheet of the present disclosure.

In an embodiment of the present disclosure, the steel slab or ingot may be manufactured through an electric furnace or a new blast furnace-converter process, and pig iron along with scrap iron may be used as a raw material used in the electric furnace or blast furnace-converter process. In this case, the pig iron refers to molten iron obtained from the blast furnace-converter process, a cold material (corrugate) or hot briquette iron (HBI) thereof, or the like.

In the electric furnace, desulfurization may be performed through ladle refining after tapping from the electric furnace, and desulfurization and subsequent vacuum degassing may be performed. Furthermore, steel obtained from the electric furnace may be adjusted to achieve a desired final alloy composition by adding alloying elements during degassing. Common vacuum degassing methods include an RH method or a DH method, but oxygen injection into the degassing tank may also be used. One such method may be the oxygen injection method using a top blowing lance.

[Steel Slab Heating]

A steel slab may be prepared, and may then be heated. The steel slab may be a steel ingot. In an embodiment of the present disclosure, the steel slab may have an alloy composition, as described above, and the alloy composition of the steel slab may be replaced with the aforementioned description.

In an embodiment of the present disclosure, a heating temperature of the prepared steel slab or ingot may range from 900 to 1300°C. When the heating temperature exceeds 1300°C, the steel may reach a melting point thereof and may be melted. Conversely, when the temperature is less than 900°C, a rolling load during subsequent hot-rolling may increase, potentially reducing hot-rolling stability. In another embodiment of the present disclosure, the heating may be performed at 1160°C or lower.

[Hot-Rolling]

The heated steel slab or ingot may be hot-rolled to produce a hot-rolled steel sheet.

In an embodiment of the present disclosure, a finishing temperature during hot-rolling may be either an austenite region of an Ar3 transformation point or higher or a ferrite region of the Ar3 transformation point or lower. When the finishing temperature is too low, the rolling load during hot-rolling may increase, so a lower limit temperature thereof may be limited to 750°C or higher.

[Coiling]

The hot-rolled steel sheet obtained through the hot-rolling process may be coiled into a coil shape.

In an embodiment of the present disclosure, the coiling process may be performed at a temperature of 700°C or higher. When the coiling temperature is lower than 700°C, a grain size of the hot-rolled steel sheet obtained after the coiling may not be secured in an intended degree. In another embodiment of the present disclosure, the coiling process may be performed at a temperature of 720°C or higher.

An upper limit of the coiling temperature may not be particularly limited. Considering a risk of excessive scale formation on a surface of the hot-rolled coil, the temperature may be limited to 800°C or lower.

The present disclosure achieves a grain relationship, i.e., a range of I/II, in the hot-rolled steel sheet and in a subsequent cold-rolled steel sheet by coiling at the above-described temperature.

[Cooling]

The hot-rolled steel sheet coiled as described above may be cooled while uncoiling.

In an embodiment of the present disclosure, cooling after the coiling may be performed at a cooling rate of 10.0°C/min or less to a temperature range of 250 to 350°C. This relatively slow cooling rate ensures uniform grain distribution within a microstructure.

In an embodiment of the present disclosure, when the cooling rate exceeds 10.0°C/min, grains may become coarser. A lower limit of the cooling rate during the cooling may not be particularly limited. An excessively low cooling rate may strain the cooling equipment and may also cause grain coarser grains. Therefore, considering these factors, the cooling rate may be limited to 0.2°C/min or higher.

When a cooling end temperature falls lower than 250°C during the cooling at the aforementioned cooling rate, the cooling time may be excessive, potentially reducing productivity. Conversely, when the cooling end temperature exceeds 350°C, there may be a risk of increased load during subsequent cold-rolling.

[Cold-Rolling]

The cooled uncoiled hot-rolled steel sheet may be cold-rolled to obtain a cold-rolled steel sheet.

In an embodiment of the present disclosure, cold-rolling may be performed at a cold reduction ratio of 50% or greater. When the cold reduction ratio is less than 50%, it may be difficult to secure a target thickness, and it may be difficult to correct a shape of the steel sheet. In an embodiment of the present disclosure, an upper limit of the cold reduction ratio during the cold-rolling may not be specifically limited. When the cold reduction ratio is excessively high, increased cold-rolling load may be incurred. Therefore, considering this, the upper limit of the cold reduction ratio may be limited to 95% or less.

[Annealing]

The cold-rolled steel sheet obtained as described above may be subjected to annealing heat treatment.

In an embodiment of the present disclosure, the annealing heat treatment may be performed in a conventional continuous annealing furnace. Preferably, the cold-rolled steel sheet may be heated to 600°C or higher and then annealed for 10 seconds or longer. When a temperature is lower than 600°C or an annealing time is shorter than 10 seconds, recrystallization may not be sufficient, potentially resulting in development of unrecrystallized structures. In this case, formability of the steel sheet may be reduced.

In an embodiment of the present disclosure, upper limits of the temperature and time for the annealing heat treatment may not be particularly limited. Considering a risk of equipment trouble due to high-temperature annealing and poor powdering properties, the upper limits may be set to 960°C and 15 minutes, respectively.

When heating the cold-rolled steel sheet to the temperature required for annealing heat treatment, heating may be performed at a constant heating rate. As an example, the heating process may be performed at a heating rate of 2 to 60°C/s. When the heating rate is too slow or too fast, grain characteristics intended for the present disclosure may not be achieved.

The cold-rolled steel sheet manufactured through the aforementioned series of processes may have strength and formability targeted by the present disclosure.

In particular, the cold-rolled steel sheet of the present disclosure may have a product (TS × El) of tensile strength (TS) and elongation (El) of 4.0 to 30.0 GPa·%, and a product (r-value × El) of Lankford value (r-value) and elongation of 20 to 200%.

According to an aspect of the present disclosure, the steel sheet, i.e., the cold-rolled steel sheet, may be plated to obtain a plated steel sheet. The cold-rolled steel sheet may be a cold-rolled steel sheet manufactured through a series of processes according to an embodiment of the present disclosure. Accordingly, the plated steel sheet may have a plating layer on at least one surface of the aforementioned cold-rolled steel sheet.

In an embodiment of the present disclosure, the plating process may be a hot-dip plating process or an electroplating process, and each plating process may be performed under conditions commonly practiced in the relevant technical field.

As an example, the hot-dip plating process may be performed by immersing the cold-rolled steel sheet, which has undergone an annealing heat treatment, in a hot-dip galvanizing bath containing zinc as a main component. The conditions for the hot-dip galvanizing process may be conventional conditions, and may not be specifically limited in the present disclosure. As an embodiment, GI hot-dip plating may be performed under conventional conditions within a temperature range of 440 to 520°C.

In addition, according to an embodiment of the present disclosure, a plated steel sheet having a zinc-based plating layer formed thereon may be selectively subjected to an alloying heat treatment to obtain an alloyed hot-dip galvanized steel sheet (GA). The alloying heat treatment may also be performed under conventional conditions and may not be specifically limited thereto. As an example, the alloying heat treatment may be performed at a temperature range of 500 to 560°C.

Furthermore, as another example, the electroplating process may be performed by placing a base steel sheet (cold-rolled steel sheet) on a negative electrode of a vertical plating cell-type electroplating simulator, and then circulating a zinc (Zn)-containing plating solution to form a zinc-based plating layer on at least one surface of the base steel sheet (cold-rolled steel sheet).

Hereinafter, the present disclosure will be described in more detail below through examples. It should be noted that the following examples may be intended solely to illustrate the present disclosure and may not be intended to limit the scope of the invention. This may be because the scope of the invention may be determined by the matters set forth in the claims and matters reasonably inferred therefrom.

Mode for the Invention

**(Example)**

A steel slab having an alloy composition shown in Table 1 below was prepared, and then the steel slab was subjected to a series of processes under conditions shown in Table 2 below to obtain a steel sheet (cold-rolled steel sheet). In this case, a cooling temperature after coiling was maintained at a temperature range of 250 to 350°C.

The steel slab was obtained through the following process. First, scrap iron mixed with molten iron from a conventional blast furnace was introduced into an electric furnace to obtain molten steel. The molten steel was then transferred to a ladle, and vacuum degassing was performed in an RH degassing furnace (0.1 torr). At the same time, alloying components were added to produce molten steel having a desired composition. The molten steel was then produced into a slab by continuous casting.

A microstructure and mechanical properties of the produced steel sheet were measured and evaluated, and all results therefrom may be presented in Table 3 below. In this case, phase types and properties of the microstructure were measured and evaluated for cold-rolled steel sheets, while grain sizes were measured for both hot-rolled steel sheets and cold-rolled steel sheets. The cold-rolled steel sheets in this study correspond to cold-rolled steel sheets after annealing.

A microstructure of each cold-rolled steel sheet was determined by sampling and polishing specimens at t/4 in a thickness direction, nital etching the polished specimens, and then observing cross-sections of the polished specimens using a scanning electron microscope (SEM). After nital etching, a structure without irregularities on surfaces of the specimens was identified as ferrite, while a structure having a spherical or lamellar structure were identified as cementite. To determine grain size characteristics of the ferrite, an average grain size of the ferrite was measured using an optical microscope for each specimens sampled at t/4 in the thickness direction of the hot-rolled steel sheets before cold-rolling and cold-rolled steel sheets, after cross-sectioning and nital etching.

Furthermore, tensile tests were conducted to evaluate properties of each steel sheet. The tensile tests were conducted on specimens collected according to JIS No. 5 standards at 90 degrees to the rolling direction of the rolled sheet. A product (TS × El) of tensile strength (TS) and elongation (El) was calculated. Furthermore, Lankford value (r-value) of the same specimens was measured using a three-point method after 15% tensile prestrain. Average values in a rolling direction (L-direction), a direction perpendicular to the rolling direction (C-direction), and a direction at 45 degrees to the rolling direction (D-direction) were calculated using the following formula:

$$\text{r-value} = (r_L + 2r_D + r_C) / 4$$

To determine contents (wt%) of specific elements (Cu, Cr, Ni, and Sn) at different points along the cold-rolled steel sheet thickness, cross-sections of each of the specimens were removed using FIB and then analyzed using FE-SEM. In this case, according to definition of a surface portion, contents in the surface portion and those at a central portion (t/2) point in the thickness direction were measured separately. Each measurement was repeated 30 times, and maximum and minimum values for each of the elements were removed, and contents thereof were calculated as an average value.

Furthermore, to evaluate powdering properties, each cold-rolled steel sheet was plated in a hot-dip galvanizing bath at 440 to 480°C, and the resulting plated steel sheet was evaluated using a 45-degree V-bend test. A test surface was positioned on an inner side of a bend portion, and a mold with a 1-mm radius of curvature at a tip was used to bend the steel sheet at 60 degrees. A tape was then applied to the inner side, and the tape was removed. The resulting plating layer was then peeled off along with the tape, and the powdering properties were evaluated on a 5-point scale. The evaluation criteria were as follows, with a score of 2 or higher considered acceptable.

Peeling width less than 2 mm: 5 points

Peeling width 2 mm to less than 3 mm: 4 points

Peeling width 3 mm to less than 5 mm: 3 points

Peeling width 5 mm to less than 7 mm: 2 points

Peeling width 7 mm or greater: 1 point

[Table 1]

| Steel | Alloy Composition (wt%) | | | | | | | | | | | | |
|---|---|---|---|---|---|---|---|---|---|---|---|---|---|
| | C | Si | Mn | P | S | Al | N | Cu | Cr | Ni | Sn | Ti | Others |
| A | 0.0007 | 0.003 | 0.054 | 0.002 | 0.0015 | 0.026 | 0.0015 | 0.83 | 0.68 | 0.85 | 0.32 | 0.012 | Hf 0.005 |
| B | 0.0015 | 0.004 | 0.096 | 0.005 | 0.004 | 0.029 | 0.0038 | 0.65 | 0.84 | 0.47 | 0.18 | 0.034 | Nb 0.023 Y 0.004 |
| C | 0.0026 | 0.015 | 0.162 | 0.012 | 0.009 | 0.034 | 0.0057 | 0.47 | 0.35 | 0.48 | 0.09 | 0.051 | W 0.02 |
| D | 0.0039 | 0.023 | 0.205 | 0.026 | 0.014 | 0.031 | 0.0062 | 0.38 | 0.26 | 0.33 | 0.05 | 0.056 | Mg 0.002 |
| E | 0.0158 | 0.028 | 0.251 | 0.038 | 0.019 | 0.034 | 0.0085 | 0.26 | 0.21 | 0.22 | 0.03 | 0.078 | Mo 0.03 Zr 0.01 |
| F | 0.0282 | 0.026 | 0.289 | 0.049 | 0.023 | 0.032 | 0.0098 | 0.14 | 0.12 | 0.10 | 0.01 | 0.095 | B 0.0021 Sb 0.002 |

(continued)

| Steel | Alloy Composition (wt%) | | | | | | | | | | | | |
|---|---|---|---|---|---|---|---|---|---|---|---|---|---|
| | C | Si | Mn | P | S | Al | N | Cu | Cr | Ni | Sn | Ti | Others |
| G | 0.0497 | 0.032 | 0.375 | 0.064 | 0.035 | 0.033 | 0.0163 | 0.003 | 0.002 | 0.002 | 0.001 | 0.142 | Ca 0.005 REM 0.001 |
| XA | 0.0731 | 0.021 | 0.234 | 0.028 | 0.025 | 0.027 | 0.0042 | 0.19 | 0.23 | 0.16 | 0.021 | 0.038 | - |
| XB | 0.0023 | 0.827 | 0.251 | 0.025 | 0.021 | 0.025 | 0.0058 | 0.22 | 0.21 | 0.24 | 0.025 | 0.053 | - |
| XC | 0.0020 | 0.024 | 1.075 | 0.017 | 0.030 | 0.034 | 0.0062 | 0.20 | 0.25 | 0.18 | 0.020 | 0.057 | - |
| XD | 0.0025 | 0.023 | 0.216 | 0.019 | 0.034 | 0.539 | 0.0066 | 0.25 | 0.16 | 0.17 | 0.017 | 0.061 | - |
| XE | 0.0022 | 0.025 | 0.220 | 0.020 | 0.028 | 0.030 | 0.0342 | 0.18 | 0.17 | 0.20 | 0.019 | 0.295 | - |
| XF | 0.0024 | 0.029 | 0.204 | 0.023 | 0.024 | 0.036 | 0.0059 | 1.14 | 0.21 | 0.25 | 0.024 | 0.052 | - |
| XG | 0.0025 | 0.020 | 0.312 | 0.028 | 0.023 | 0.031 | 0.0050 | 0.26 | 1.08 | 0.23 | 0.023 | 0.044 | - |
| Xh | 0.0026 | 0.027 | 0.281 | 0.025 | 0.026 | 0.025 | 0.0045 | 0.32 | 0.26 | 1.21 | 0.028 | 0.040 | - |
| XI | 0.0021 | 0.022 | 0.237 | 0.027 | 0.020 | 0.027 | 0.0042 | 0.34 | 0.23 | 0.17 | 0.523 | 0.036 0. | - |
| In Table 1, REM refers to REM excluding Y. | | | | | | | | | | | | | |

[Table 2]

| Steel | Reheating Temp. (°C) | Finish-Rolling Temp. (°C) | Coiling Temp. (°C) | After Coiling, Cooling (°C/min) | Cold Reduction Ratio (%) | Heating Rate (°C/s) | Annealing Temp. (°C) | Annealing Time (s) | I/II | Specimen No. |
|---|---|---|---|---|---|---|---|---|---|---|
| A | 1160 | 880 | 750 | 0.5 | 76 | 45 | 930 | 40 | 0.96 | 1 |
| B | 1160 | 880 | 750 | 0.5 | 76 | 42 | 820 | 40 | 0.57 | 2 |
| A | 1270 | 930 | 830 | 0.6 | 76 | 47 | 940 | 600 | 0.94 | 3 |
| B | 1060 | 780 | 400 | 0.6 | 76 | 39 | 760 | 20 | 0.58 | 4 |
| A | 1160 | 880 | 750 | 0.2 | 76 | 58 | 880 | 40 | 0.74 | 5 |
| B | 1160 | 880 | 790 | 0.5 | 76 | 35 | 870 | 40 | 0.77 | 6 |
| B | 1320 | 950 | 750 | 0.7 | 76 | 28 | 880 | 40 | 0.82 | 7 |
| B | 880 | 630 | 450 | 0.5 | 76 | 22 | 880 | 40 | 0.73 | 8 |
| B | 1280 | 950 | 820 | 0.6 | 76 | 30 | 880 | 40 | 0.64 | 9 |
| B | 1050 | 820 | 680 | 0.8 | 76 | 32 | 880 | 40 | 0.82 | 10 |
| B | 1160 | 880 | 750 | 0.9 | 48 | 35 | 880 | 40 | 0.51 | 11 |
| B | 1160 | 880 | 750 | 1.0 | 76 | 35 | 580 | 40 | 0.38 | 12 |
| B | 1160 | 880 | 750 | 1.0 | 76 | 35 | 970 | 40 | 0.98 | 13 |
| B | 1160 | 880 | 700 | 0.7 | 76 | 23 | 880 | 5 | 0.37 | 14 |
| B | 1160 | 880 | 700 | 0.7 | 76 | 23 | 880 | 1000 | 0.98 | 15 |
| B | 1160 | 880 | 700 | 0.1 | 76 | 18 | 860 | 40 | 0.97 | 16 |
| B | 1160 | 880 | 750 | 10.7 | 76 | 20 | 860 | 40 | 0.57 | 17 |
| B | 1160 | 880 | 750 | 0.6 | 76 | 1 | 860 | 40 | 0.98 | 18 |
| B | 1160 | 880 | 700 | 0.7 | 76 | 62 | 860 | 40 | 0.51 | 19 |
| C | 1050 | 880 | 750 | 0.8 | 76 | 26 | 860 | 800 | 0.82 | 20 |

(continued)

| Steel | Reheating Temp. (°C) | Finish-Rolling Temp. (°C) | Coiling Temp. (°C) | After Coiling, Cooling (°C/min) | Cold Reduction Ratio (%) | Heating Rate (°C/s) | Annealing Temp. (°C) | Annealing Time (s) | I/II | Specimen No. |
|---|---|---|---|---|---|---|---|---|---|---|
| D | 1050 | 880 | 720 | 0.9 | 76 | 14 | 860 | 40 | 0.93 | 21 |
| E | 1200 | 880 | 720 | 1.2 | 76 | 8 | 900 | 40 | 0.62 | 22 |
| F | 1250 | 880 | 750 | 2.6 | 76 | 5 | 950 | 40 | 0.70 | 23 |
| G | 1160 | 880 | 780 | 5.4 | 76 | 2 | 880 | 40 | 0.71 | 24 |
| XA | 1160 | 880 | 750 | 0.8 | 76 | 18 | 880 | 40 | 0.42 | 25 |
| XB | 1160 | 880 | 750 | 0.6 | 76 | 20 | 880 | 40 | 0.51 | 26 |
| XC | 1160 | 880 | 750 | 0.5 | 76 | 20 | 880 | 40 | 0.47 | 27 |
| XD | 1160 | 880 | 750 | 0.9 | 76 | 24 | 880 | 40 | 0.49 | 28 |
| XE | 1160 | 880 | 750 | 0.7 | 76 | 26 | 880 | 40 | 0.55 | 29 |
| XF | 1160 | 880 | 750 | 0.3 | 76 | 29 | 880 | 40 | 0.53 | 30 |
| XG | 1160 | 880 | 750 | 0.4 | 76 | 17 | 880 | 40 | 0.50 | 31 |
| XH | 1160 | 880 | 750 | 0.5 | 76 | 15 | 880 | 40 | 0.51 | 32 |
| XI | 1160 | 880 | 750 | 0.8 | 76 | 22 | 880 | 40 | 0.54 | 33 |

In Table 2, I/II refers to a value (I/II) obtained by dividing an average grain size (I) of the cold-rolled steel sheet by an average grain size (II) of the hot-rolled steel sheet.

[Table 3]

| Specimen No. | A/B | Cold-Rolled Steel Sheet Average Grain Size (μm) | TS×El (GPa%) | r-value×El (%) | Powdering Properties |
|---|---|---|---|---|---|
| 1 | 0.53 | 46 | 23 | 189 | 4 |
| 2 | 0.57 | 23 | 17 | 93 | 4 |
| 3 | 30.82 | 53 | 34 | 206 | 1 |
| 4 | 0.51 | 5 | 3.3 | 19 | 4 |
| 5 | 0.19 | 39 | 29 | 197 | 5 |
| 6 | 0.34 | 34 | 24 | 165 | 5 |
| 7 | 0.38 | 17 | 3.5 | 17 | 4 |
| 8 | 0.54 | 9 | 3.1 | 14 | 4 |
| 9 | 32.43 | 30 | 20 | 135 | 1 |
| 10 | 0.41 | 14 | 3.2 | 18 | 4 |
| 11 | 0.52 | 18 | 5.6 | 12 | 3 |
| 12 | 0.14 | 9 | 3.4 | 16 | 1 |
| 13 | 0.36 | 35 | 26 | 143 | 3 |
| 14 | 0.12 | 15 | 3.7 | 15 | 1 |
| 15 | 0.23 | 33 | 21 | 156 | 3 |
| 16 | 0.45 | 40 | 25 | 174 | 2 |
| 17 | 0.34 | 14 | 3.3 | 17 | 4 |
| 18 | 0.48 | 32 | 20 | 139 | 2 |
| 19 | 0.39 | 13 | 3.0 | 15 | 4 |

(continued)

| Specimen No. | A/B | Cold-Rolled Steel Sheet Average Grain Size (μm) | TS×El (GPa%) | r-value×El (%) | Powdering Properties |
|---|---|---|---|---|---|
| 20 | 0.82 | 25 | 23 | 124 | 4 |
| 21 | 2.52 | 22 | 16 | 95 | 4 |
| 22 | 8.49 | 19 | 12 | 67 | 4 |
| 23 | 16.2 | 14 | 7.2 | 34 | 3 |
| 24 | 28.5 | 8 | 4.3 | 22 | 3 |
| 25 | 16.9 | 4 | 2.8 | 16 | 2 |
| 26 | 26.4 | 9 | 3.3 | 15 | 2 |
| 27 | 25.8 | 7 | 3.7 | 18 | 3 |
| 28 | 20.7 | 8 | 2.6 | 14 | 2 |
| 29 | 21.2 | 5 | 2.5 | 17 | 3 |
| 30 | 23.0 | 9 | 3.8 | 15 | 3 |
| 31 | 26.4 | 12 | 3.1 | 13 | 2 |
| 32 | 15.7 | 13 | 2.4 | 16 | 2 |
| 33 | 16.9 | 15 | 2.7 | 18 | 2 |
| In Table 3, A/B refers to a value (A/B) obtained by dividing a content (wt%, A) of average (Cu+Cr+Ni+Sn) in a surface portion by a content (wt%, B) of average (Cu+Cr+Ni+Sn) in a central portion | | | | | |

As shown in Tables 1 through 3, for specimens that satisfied both the alloy composition and manufacturing conditions proposed in the present disclosure, the microstructures were formed with intended grain size, and both strength and formability were excellent.

Conversely, for specimens that deviated from either the alloy composition or manufacturing conditions of the present disclosure, the grain sizes of the microstructure did not form as intended, or specific elements were unevenly distributed, resulting in at least one or more properties, such as strength, formability, and plating adhesion, being inferior.

Thus, the technical significance of the present disclosure lies in its ability to achieve both excellent formability and plating adhesion by controlling grain size characteristics and the content ratio of specific elements in the thickness direction.

## Claims

1. A steel sheet comprising:

by weight, carbon (C): greater than 0% to 0.0700%, silicon (Si): greater than 0% to 0.800%, manganese (Mn): greater than 0% to 1.000%, aluminum (Al): greater than 0% to 0.500%, phosphorus (P): 0% to 0.080%, sulfur (S): 0% to 0.0500%, nitrogen (N): 0% to 0.0300%, copper (Cu): greater than 0% to 1.000%, nickel (Ni): greater than 0% to 1.000%, chromium (Cr): greater than 0% to 1.000%, tin (Sn): greater than 0% to 0.5000%, at least one selected from the following groups (i) to (vi), and a remainder of Fe and unavoidable impurities,

(i) molybdenum (Mo): 0% to 1.000%;
(ii) at least one of titanium (Ti): 0 to 0.500%, niobium (Nb): 0 to 0.500%, vanadium (V): 0 to 0.500%, and boron (B): 0 to 0.0200%;
(iii) at least one of magnesium (Mg): 0 to 0.050%, calcium (Ca): 0 to 0.050%, and a rare earth element (REM) excluding yttrium (Y): 0 to 0.050%;
(iv) at least one of tungsten (W): 0 to 0.50% and zirconium (Zr): 0 to 0.50%;
(v) at least one of antimony (Sb): 0 to 0.5000% and cobalt (Co): 0 to 0.5000%; and
(vi) at least one of yttrium (Y): 0 to 0.200% and hafnium (Hf): 0 to 0.200%,

wherein, A/B satisfies 0.15 to 30, if A is a content (wt%) of average (Cu+Cr+Ni+Sn) in a surface portion, and B is a content (wt%) of average (Cu+Cr+Ni+Sn) in a central portion,
wherein the central portion refers to a point t/2 in a thickness direction, and the surface portion refers to from a surface to an inflection point, which is a point at which concentration gradients of Cu, Cr, Ni, and Sn are changed when measured in the thickness direction, and the inflection point refers to a point corresponding to 99% of a (Cu+Cr+Ni+Sn) content in the central portion in the concentration gradient measurement value when a (Cu+Cr+Ni+Sn) content in a polar surface is greater than a (Cu+Cr+Ni+Sn) content in the central portion, or refers to a point corresponding to 1% of a (Cu+Cr+Ni+Sn) content in the central portion in the concentration gradient measurement value when the (Cu+Cr+Ni+Sn) content in the polar surface is less than that in the central portion, and
wherein an average grain size is 6 to 50 μm.

2. The steel sheet of claim 1, wherein the steel sheet is a cold-rolled steel sheet manufactured by cold-rolling and annealing a hot-rolled steel sheet obtained by hot-rolling, and
a value (I/II) obtained by dividing an average grain size (I) of the cold-rolled steel sheet by an average grain size (II) of the hot-rolled steel sheet satisfies 0.60 to 0.95.

3. The steel sheet of claim 1, wherein a microstructure is a ferrite single phase.

4. The steel sheet of claim 1, wherein a product (TS × El) of tensile strength (TS) and elongation (El) is 4.0 to 30.0 GPa·%.

5. The steel sheet of claim 1, wherein a product (r-value × El) of Lankford value (r-value) and elongation is 20 to 200%.

6. The steel sheet of claim 1, wherein the steel sheet includes a plating layer formed on at least one surface.

7. The steel sheet of claim 6, wherein a powdering peeling width of the plating layer is less than 7 mm.

8. A method for manufacturing a steel sheet, comprising:

preparing a steel slab including, by weight, carbon (C): greater than 0% to 0.0700%, silicon (Si): greater than 0% to 0.800%, manganese (Mn): greater than 0% to 1.000%, aluminum (Al): greater than 0% to 0.500%, phosphorus (P): 0% to 0.080%, sulfur (S): 0% to 0.0500%, nitrogen (N): 0% to 0.0300%, copper (Cu): greater than 0% to 1.000%, nickel (Ni): greater than 0% to 1.000%, chromium (Cr): greater than 0% to 1.000%, tin (Sn): greater than 0% to 0.5000%, at least one selected from the following groups (i) to (vi), and a remainder of Fe and unavoidable impurities;

(i) molybdenum (Mo): 0% to 1.000%;
(ii) at least one of titanium (Ti): 0 to 0.500%, niobium (Nb): 0 to 0.500%, vanadium (V): 0 to 0.500%, and boron (B): 0 to 0.0200%;
(iii) at least one of magnesium (Mg): 0 to 0.050%, calcium (Ca): 0 to 0.050%, and a rare earth element (REM) excluding yttrium (Y): 0 to 0.050%;
(iv) at least one of tungsten (W): 0 to 0.50% and zirconium (Zr): 0 to 0.50%;
(v) at least one of antimony (Sb): 0 to 0.5000% and cobalt (Co): 0 to 0.5000%; and
(vi) at least one of yttrium (Y): 0 to 0.200% and hafnium (Hf): 0 to 0.200%,

heating the steel slab at a temperature range of 900 to 1300°C;
finish-rolling the heated steel slab in an austenite region of an Ar3 transformation point or higher or in a ferrite region of the Ar3 transformation point or lower, to obtain a hot-rolled steel sheet;
coiling the hot-rolled steel sheet at a temperature of 700°C or higher;
cooling the coiled hot-rolled steel sheet to a temperature range of 250 to 350°C at a rate of 10°C/min or lower;
cold-rolling the hot-rolled steel sheet after the cooling at a cold reduction ratio of 50% or higher, to obtain a cold-rolled steel sheet; and
annealing the cold-rolled steel sheet at a temperature of 600°C or higher for 10 seconds or longer.

9. The method of claim 8, wherein a value (I/II) obtained by dividing an average grain size (I) of the cold-rolled steel sheet after the annealing by an average grain size (II) of the hot-rolled steel sheet after the coiling, satisfies 0.60 to 0.95.

10. The method of claim 8, wherein the steel slab is obtained by continuously casting molten steel obtained through a steelmaking process in an electric furnace.

11. The method of claim 8, wherein the annealing is performed by heating the cold-rolled steel sheet to an annealing temperature at a heating rate of 2 to 60°C/s.

12. The method of claim 8, further including plating the cold-rolled steel sheet after the annealing, wherein the plating is a hot-dip plating or electroplating process.

13. The method of claim 12, wherein the hot-dip plating is hot-dip galvanizing at a temperature range of 440 to 520°C.

14. The method of claim 13, further including alloy-heating after the hot-dip galvanizing.

15. A steel sheet manufactured by the method of any one of claims 8 to 14, wherein a value (I/II) obtained by dividing an average grain size (I) of the cold-rolled steel sheet after the annealing by an average grain size (II) of the hot-rolled steel sheet satisfies 0.60 to 0.95.

16. The steel sheet of claim 15, wherein the steel sheet includes a plating layer formed on at least one surface.

17. The steel sheet of claim 16, wherein a powdering peeling width of the plating layer is less than 7 mm.

# EP 4 759 960 A1

## INTERNATIONAL SEARCH REPORT

| International application No. |
|---|
| **PCT/KR2024/011912** |

### A. CLASSIFICATION OF SUBJECT MATTER

**C22C 38/60**(2006.01)i; **C22C 38/42**(2006.01)i; **C22C 38/00**(2006.01)i; **C21D 8/02**(2006.01)i; **C21D 9/46**(2006.01)i; **C23C 2/06**(2006.01)i; **C23C 2/28**(2006.01)i; **C25D 3/22**(2006.01)i

According to International Patent Classification (IPC) or to both national classification and IPC

### B. FIELDS SEARCHED

Minimum documentation searched (classification system followed by classification symbols)

C22C 38/60(2006.01); B21C 47/02(2006.01); C21D 8/02(2006.01); C21D 9/46(2006.01); C22C 38/00(2006.01); C22C 38/06(2006.01); C22C 38/58(2006.01); C23C 2/02(2006.01); C23C 2/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 냉간가공성(cold workability), 도금밀착성(coating adhesion), 결정립(grain), 구리 (Cu), 니켈(Ni), 크롬(Cr), 주석(Sn), 냉연강판(cold rolled steel sheet), 냉각속도(cooling speed)

### C. DOCUMENTS CONSIDERED TO BE RELEVANT

| Category* | Citation of document, with indication, where appropriate, of the relevant passages | Relevant to claim No. |
|---|---|---|
| A | JP 6458870 B2 (JFE STEEL CORP.) 30 January 2019 (2019-01-30) See paragraphs [0027], [0040]-[0042] and [0046]-[0047] and claims 1, 3 and 6-7. | 1-17 |
| A | KR 10-2023-0094666 A (POSCO) 28 June 2023 (2023-06-28) See claims 5, 8 and 11-12. | 1-17 |
| A | KR 10-2021-0108461 A (NIPPON STEEL CORPORATION) 02 September 2021 (2021-09-02) See claims 1 and 3. | 1-17 |
| A | KR 10-2006-0030909 A (JFE STEEL CORPORATION) 11 April 2006 (2006-04-11) See claims 1, 3-4 and 6. | 1-17 |
| A | KR 10-2014-0081618 A (POSCO) 01 July 2014 (2014-07-01) See paragraphs [0033]-[0040] and claims 5-8. | 1-17 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 November 2024** | **12 November 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 759 960 A1

## INTERNATIONAL SEARCH REPORT

| International application No. |
|---|
| **PCT/KR2024/011912** |

**C.    DOCUMENTS CONSIDERED TO BE RELEVANT**

| Category* | Citation of document, with indication, where appropriate, of the relevant passages | Relevant to claim No. |
|---|---|---|
| A | JP 5408383 B2 (NIPPON STEEL & SUMITOMO METAL CORPORATION) 05 February 2014 (2014-02-05)<br>        See claims 1, 2 and 10. | 1-17 |

## INTERNATIONAL SEARCH REPORT
### Information on patent family members

International application No.

**PCT/KR2024/011912**

| Patent document cited in search report | | | Publication date (day/month/year) | Patent family member(s) | | | Publication date (day/month/year) |
|---|---|---|---|---|---|---|---|
| JP | 6458870 | B2 | 30 January 2019 | CN | 108699657 | A | 23 October 2018 |
| | | | | CN | 108699657 | B | 05 February 2021 |
| | | | | EP | 3412787 | A1 | 12 December 2018 |
| | | | | EP | 3412787 | B1 | 06 January 2021 |
| | | | | JP | 06-610749 | B2 | 27 November 2019 |
| | | | | JP | 2019-044269 | A | 22 March 2019 |
| | | | | KR | 10-2018-0112817 | A | 12 October 2018 |
| | | | | KR | 10-2119017 | B1 | 04 June 2020 |
| | | | | MX | 2018010932 | A | 22 November 2018 |
| | | | | US | 2019-0078172 | A1 | 14 March 2019 |
| | | | | WO | 2017-154727 | A1 | 15 March 2018 |
| | | | | WO | 2017-154727 | A1 | 14 September 2017 |
| KR | 10-2023-0094666 | A | 28 June 2023 | None | | | |
| KR | 10-2021-0108461 | A | 02 September 2021 | CN | 113330133 | A | 31 August 2021 |
| | | | | CN | 113330133 | B | 05 August 2022 |
| | | | | EP | 3922745 | A1 | 15 December 2021 |
| | | | | JP | 6750772 | B1 | 02 September 2020 |
| | | | | MX | 2021009452 | A | 14 September 2021 |
| | | | | US | 11905570 | B2 | 20 February 2024 |
| | | | | US | 2022-0119908 | A1 | 21 April 2022 |
| | | | | US | 2024-0182997 | A1 | 06 June 2024 |
| | | | | WO | 2020-162561 | A1 | 13 August 2020 |
| KR | 10-2006-0030909 | A | 11 April 2006 | CA | 2530834 | A1 | 07 April 2005 |
| | | | | CA | 2530834 | C | 01 November 2011 |
| | | | | CN | 102517493 | A | 27 June 2012 |
| | | | | CN | 102517493 | B | 12 November 2014 |
| | | | | CN | 1833042 | A | 13 September 2006 |
| | | | | EP | 1666622 | A1 | 07 June 2006 |
| | | | | EP | 1666622 | B1 | 04 September 2013 |
| | | | | JP | 2005-120467 | A | 12 May 2005 |
| | | | | JP | 4635525 | B2 | 23 February 2011 |
| | | | | US | 2006-0191612 | A1 | 31 August 2006 |
| | | | | US | 7686896 | B2 | 30 March 2010 |
| | | | | WO | 2005-031022 | A1 | 07 April 2005 |
| KR | 10-2014-0081618 | A | 01 July 2014 | KR | 10-1490563 | B1 | 05 February 2015 |
| JP | 5408383 | B2 | 05 February 2014 | BR | 112013024984 | A2 | 20 December 2016 |
| | | | | BR | 112013024984 | B1 | 11 December 2018 |
| | | | | BR | 112013025015 | A2 | 01 March 2017 |
| | | | | BR | 112013025015 | B1 | 06 November 2018 |
| | | | | CA | 2829753 | A1 | 04 October 2012 |
| | | | | CA | 2829753 | C | 08 March 2016 |
| | | | | CA | 2831404 | A1 | 04 October 2012 |
| | | | | CA | 2831404 | C | 08 March 2016 |
| | | | | CN | 103459647 | A | 18 December 2013 |
| | | | | CN | 103459647 | B | 02 September 2015 |
| | | | | CN | 103476960 | A | 25 December 2013 |
| | | | | CN | 103476960 | B | 27 April 2016 |
| | | | | EP | 2692893 | A1 | 05 February 2014 |
| | | | | EP | 2692893 | B1 | 20 December 2017 |

Form PCT/ISA/210 (patent family annex) (July 2022)

## INTERNATIONAL SEARCH REPORT
### Information on patent family members

| International application No. |
| --- |
| **PCT/KR2024/011912** |

| Patent document cited in search report | Publication date (day/month/year) | Patent family member(s) | | Publication date (day/month/year) |
| --- | --- | --- | --- | --- |
| | | EP | 2692895 A1 | 05 February 2014 |
| | | EP | 2692895 B1 | 28 February 2018 |
| | | ES | 2655939 T3 | 22 February 2018 |
| | | ES | 2665982 T3 | 30 April 2018 |
| | | JP | 5408382 B2 | 05 February 2014 |
| | | KR | 10-1536845 B1 | 14 July 2015 |
| | | KR | 10-1549317 B1 | 01 September 2015 |
| | | KR | 10-2013-0123460 A | 12 November 2013 |
| | | KR | 10-2013-0125821 A | 19 November 2013 |
| | | MX | 2013011062 A | 17 October 2013 |
| | | MX | 2013011063 A | 17 October 2013 |
| | | MX | 338912 B | 05 May 2016 |
| | | MX | 338997 B | 09 May 2016 |
| | | PL | 2692893 T3 | 30 May 2018 |
| | | PL | 2692895 T3 | 31 July 2018 |
| | | TW | 201245465 A | 16 November 2012 |
| | | TW | 201247890 A | 01 December 2012 |
| | | TW | I447236 B | 01 August 2014 |
| | | TW | I452145 B | 11 September 2014 |
| | | US | 2014-0000765 A1 | 02 January 2014 |
| | | US | 2014-0014236 A1 | 16 January 2014 |
| | | US | 9546413 B2 | 17 January 2017 |
| | | US | 9670569 B2 | 06 June 2017 |
| | | WO | 2012-133540 A1 | 28 July 2014 |
| | | WO | 2012-133540 A1 | 04 October 2012 |
| | | WO | 2012-133563 A1 | 04 October 2012 |
| | | WO | 2012-133563 A1 | 28 July 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7118795 A
- JP 10025541 A